# FASCICULE DE BREVET EUROPEEN

(11) **EP 1 203 255 B1**
(45) Date de publication et mention de la délivrance du brevet: **25.02.2009**
(21) Numéro de dépôt: 01947512.8
(22) Date de dépôt: 18.06.2001
(51) Int. Cl.: G02B 6/44

(54) **CABLE OPTIQUE A ACCESSIBILITE CONTINUE**
OPTISCHES KABEL MIT STÄNDIGEM ZUGANG
CONTINUOUSLY ACCESSIBLE OPTICAL CABLE

(30) Priorité: 23.06.2000 FR 0008077
(43) Date de publication de la demande: 08.05.2002
(60) Demande divisionnaire: 08160267.4
(73) Titulaire: Acome Société Coopérative de Production, Société Anonyme, à capital variable, 75008 Paris (FR)
(72) Inventeur: LE NOANE, Georges, F-50600 Virey (FR); BRAULT, Dominique, F-50140 Mortain (FR); LAGREVE, christian, F-61700 Lonlay l'Abbaye (FR); FILLIATRE, Daniel, F-50140 Romagny (FR)
(74) Mandataire: Cabinet Plasseraud
(86) Numéro de dépôt international: PCT/FR2001/001895
(87) Numéro de publication internationale: WO 2001/098810

(56) Documents cités:
- EP-A- 0 459 688
- DE-A- 3 232 108
- US-A- 5 802 231

## Description

La présente invention concerne un câble optique (encore appelé câble à fibres optiques) à accessibilité continue, particulièrement adapté aux boucles locales d'abonnés et aux câblages d'intérieur, permettant une accessibilité très simple à n'importe quel endroit et permettant ainsi une dérivation à très bas coût sans devoir utiliser de boîte de dérivation.

On connaît de multiples types de câbles optiques permettant d'alimenter les réseaux locaux ou le câblage d'immeuble. Dans la plupart des cas, ces câbles ont une structure très dense. Ils comprennent un nombre plus ou moins important de fibres, et leur dérivation s'effectue à l'aide d'une boîte de dérivation. C'est grâce à cette boîte de dérivation qu'après une opération souvent longue et délicate d'enlèvement de la gaine du câble sur des longueurs relativement importantes, puis de répartition des fibres, il est possible de dériver une ou plusieurs fibres. Cependant, cette opération est coûteuse et délicate. De plus, elle n'est pas sans risque pour les fibres non dérivées qui, dans la plupart des cas, sont pourtant porteuses de hauts débits, c'est à dire d'un nombre important de liaisons transmettant de la voix, des données ou des images. De plus, en raison de leur architecture, ces techniques sont très souvent synonymes de systèmes distribués (pour le câblage d'immeubles en particulier), nécessitant la pose de nombreux câbles élémentaires, sans compter la présence des dispositifs optoélectroniques d'extrémité. Ces systèmes distribués présentent ainsi l'inconvénient majeur d'entraîner des coûts de pose extrêmement élevés, ce qui dans le cas de l'optique génère un bilan négatif par rapport aux systèmes cuivre connus.

Afin de compenser cet inconvénient majeur, et de réduire les coûts.d'installation, la plupart des solutions de câblage optique développées à ce jour tendent vers des câbles les plus denses possibles basés soit sur des empilages de rubans, soit sur des modules cylindriques de très faibles dimensions. Chaque ruban ou chaque modules cylindrique peut par exemple avoir des contenances de 4 à 12 fibres, voire plus. L'ensemble de ces rubans ou de ces modules cylindriques est compacté au plus près dans une gaine protectrice éventuellement munie de renforts, selon le cahier des charges fonctionnel du câble. Le but recherché est d'obtenir une densité maximum tout en conservant des caractéristiques mécaniques et thermiques correctes pour le câble optique.

La densité ainsi obtenue dans les câbles les plus performants de l'état de l'art autorise la pose dans des microconduites, par exemple par soufflage ou poussage ou tirage. Ces câbles présentent toutefois l'inconvénient d'être assez difficile d'accès et rendent coûteuse et délicate l'opération de piquage, c'est à dire la dérivation d'un module parmi n ou d'une fibre parmi n. Ils conviennent donc mieux aux techniques distribuées où l'éclatement rendu nécessaire s'effectue dans une boîte conçue à cet effet. De plus, la structure dense et cylindrique de l'enveloppe de tels câbles impose un « câblage » interne des éléments optiques (modules ou fibres optiques). Ce câblage interne est un assemblage des éléments optiques avec un pas donné soit en hélice continue (câblage hélicoïdal), soit, en SZ (câblage SZ), et ce afin de garantir l'intégrité des fibres lors de l'enroulement des câbles.

Ainsi, dans ces techniques connues, les structures de câble plus ou moins denses imposent pour fonctionner correctement du point de vue mécanique et thermique et pour respecter des rayons de courbure, un tel « câblage », qui ne fait qu'accroître la difficulté d'accès aux fibres et en particulier nécessite un enlèvement de gaine totale sur de grandes longueurs afin de permettre à l'opérateur de manipuler les faisceaux avec suffisamment de souplesse pour accéder au module recherché et, encore plus difficile, à la fibre recherchée. De plus, un tel câblage diminue la vitesse de fabrication du câble, et augmente les coûts. On voit donc que, quelle que soit leur forme, ovale, cylindrique, ou autre, aucune de ces structures n'a été conçue pour une accessibilité aux fibres continue et aisée.

Il existe donc un besoin pour un câble conçu pour permettre une accessibilité continue et aisée, donc permettant des dérivations faciles, tout en restant une solution et un système d'installation très économique. Résoudre ce problème est d'autant plus important que poser plusieurs câbles en parallèle, par exemple pour alimenter plusieurs postes de travail à l'intérieur d'un immeuble, reste une opération coûteuse qui place l'optique en situation difficile face au cuivre.

On connaît un câble optique dérivable dont le principe est de placer des éléments de câble dans une gaine ou profilé en forme de U ouvert sur un côté, qui peut donc être écartée tout au long du câble, à n'importe quel endroit du câble, et ainsi permettre l'accès aux éléments de câble. Ce câble a fait l'objet de la demande de brevet FR 99 13271 déposée par la Demanderesse. Cependant un tel câble implique la fabrication spéciale d'éléments de câbles et l'utilisation d'un profilé qui peut s'avérer lourd et encombrant et assez difficile à exploiter, notamment pour son stockage sur touret, sa pose et son accessibilité.

La Demanderesse a donc développé un câble optique à accessibilité continue et aisée, permettant donc d'en extraire très facilement, en un endroit quelconque, un élément optique protégeant une ou plusieurs fibres optiques, destiné à alimenter une pièce ou une zone comportant plusieurs postes de travail. Le câble développé par la Demanderesse offre des caractéristiques de résistance à la traction et à l'écrasement qui permettent une installation aisée par exemple en conduite ou dans des chemins de câbles, avec dans ce dernier cas une facilité accrue à prendre des courbures localisées et une densité qui reste raisonnable. Par sa structure, le câble objet de l'invention a aussi un comportement thermique excellent et peut être enroulé sans problème sur des tourets, sans nécessiter à l'intérieur de la gaine un câblage des éléments optiques élémentaires.

L'invention a donc pour objet un câble optique à accessibilité continue, comprenant une gaine de protection fermée entourant une cavité présentant en coupe transversale deux axes sensiblement perpendiculaires se croisant au centre de la cavité, et au moins deux fibres optiques organisées de façon telle qu'elles occupent la majeure partie de la cavité selon un axe mais qu'elles laissent un jeu important dans l'autre axe de la cavité. Les fibres optiques peuvent être organisées en au moins deux éléments optiques (également appelés modules optiques). Les fibres optiques, ou modules optiques, forment donc une sorte de nappe, plus ou moins lâche en fonction du nombre de fibres ou modules. Cette organisation du câble selon l'invention n'exclut pas une certaine superposition des fibres ou des modules au sein de la nappe. De préférence, l'un des axes est plus grand que l'autre axe. C'est de préférence dans ce grand axe que sont positionnés les éléments optiques, et donc dans le petit axe qu'est laissé le jeu. Le jeu laissé 'dans l'un des axes est très important par rapport au jeu habituel d'une structure de câble optique dense, qui est généralement réduit au strict minimum. Ce jeu autorise donc des variations dites de surlongueur de l'ordre du pour cent ou de quelques pour cents (surlongueurs jugées en pour milles dans les structures denses). Par ailleurs, la nappe de fibres ou de modules peut bouger par translation dans la cavité tout en restant dans le même axe (dans le grand axe dans le cas d'une cavité ovalisée).

La cavité présente une forme quelconque, par exemple circulaire ou ovale ou ovalisée (c'est-à-dire comprise entre un ovale et un rectangle), de préférence ovalisée. La forme extérieure de la gaine est quelconque, par exemple circulaire ou ovale ou ovalisée, de préférence ovalisée. Dans un mode de réalisation particulièrement préféré, gaine et cavité sont de forme ovalisée, et leurs grands axes coïncident.

La gaine peut comprendre dans certains modes de réalisation un ou des éléments de renforcement mécanique, positionnés de préférence de part et d'autre de la cavité, de préférence encore dans le grand axe. Ces éléments de renforcement seront de préférence de type non métallique verre-époxy, mais peuvent aussi être métalliques. Dans une application de type pose en goulotte et sur des longueurs relativement courtes, ces éléments de renforcement peuvent s'avérer non indispensables rendant la réalisation du câble encore plus économique.

Ainsi, contrairement à l'enseignement de l'art antérieur, qui incite à rechercher perpétuellement une densité de plus en plus importante, la densité du câble objet de l'invention est délibérément inférieure à la densité qu'on pourrait atteindre si la cavité était remplie. Un tel câble conserve cependant une densité suffisante pour être utilisé de façon simple dans les installations de type conduite ou chemin de câble, tout en offrant un certain jeu dans la cavité, facilitant l'accessibilité aux éléments optiques donc aux fibres optiques, et ce grâce à un remplissage optimisé, compromis entre un remplissage maximum et une densité trop faible.

La forme extérieure de préférence ovalisées du câble selon l'invention, ajoutée aux éventuels éléments de renforcement, confère audit câble un comportement de courbure privilégiée selon le grand axe de la gaine coïncidant de préférence avec le grand axe de la cavité, et assurant donc un enroulement selon ce grand axe mettant à profit le jeu important dans le petit axe. Ceci permet d'éviter un « câblage » des éléments optiques, qui peuvent donc être posés en long sans torsade. Ceci offre également une certaine souplesse au câble, malgré ses dimensions, ce qui permet d'appliquer facilement le câble aux courbures parfois sévères des chemins de câbles. Le câble obtenu présente de surcroît un très bon comportement thermique et mécanique tout en offrant une accessibilité très simple par ouverture localisée parallèle au grand axe et une visibilité des éléments de câbles optiques éventuellement colorés et placés en long dans la cavité. La courbure privilégiée selon le grand axe de la partie ovalisée extérieure et la densité raisonnable du câble permettent aussi un stockage aisé de longueurs significatives sur touret avant la pose et facilitent l'installation, et notamment les courbures imposées par des poses en chemin de câbles.

Ainsi, le câble objet de l'invention contient avantageusement des modules optiques, très denses, par exemple faits de fibres entourées d'une fine pellicule pour former des modules élémentaires pouvant aller par exemple de deux à douze fibres selon l'application projetée. On peut mélanger au sein d'un même câble des modules (par exemple 12) de capacités différentes. De tels éléments sont par ailleurs parfaitement connus et maîtrisés pour grouper des fibres, (diamètre 250 µm classiquement) dans un espace minimum avec une accessibilité très simple compte tenu de la facilité de dénudage ou dégainage de la fine pellicule. Ces modules sont des modules utilisés en câblerie et appartiennent donc à des techniques connues de câbles de forte compacité. Ces éléments sont donc placés en long dans la cavité du câble objet de l'invention. Le jeu important rencontré par ces éléments selon un axe, de préférence le petit axe, de la cavité permet d'atteindre de très grandes vitesses de câblage et donc de réaliser un câble rapidement et de façon très économique. Ils présentent un faible coefficient de frottement qui permet de les extraire d'une rangée de modules sans aucune difficulté, c'est-à-dire sans effort nuisible au comportement ou à la résistance dés fibres, y compris sur des longueurs pouvant atteindre plusieurs mètres.

La gaine de protection du câble selon l'invention et sa cavité présentent des dimensions appropriées pour l'usage envisagé. A titre d'exemple, les dimensions de la gaine peuvent être de 10 à 15 mm pour le grand axe et de 6 à 8 mm pour le petit axe (cas d'une gaine ovalisée). A titre d'exemple également, les dimensions de la cavité peuvent être de 5 à 9 mm pour le grand axe et de 2 à 4 mm pour le petit axe. Les éléments optiques ou modules positionnés dans la cavité peuvent présenter un diamètre ou une plus grande dimension en coupe de l'ordre de 0,8 mm à 1,3 mm.

Les éléments optiques disposent donc d'un certain degré de liberté au sein de la cavité, permettant une absence de contraintes sur ces modules élémentaires, que ce soit après un allongement de la gaine sous une certaine tension ou sous l'effet d'une dilation, ou après une contraction due à des températures basses.

Pour cela le procédé de fabrication du câble, bien connu par ailleurs dans le domaine de la câblerie, procuré au moment de la fabrication de la gaine de protection et de l'insertion des fibres une surlongueur d'origine, faible mais suffisante pour que l'absence de contraintes soit effective lors de la traction ou de la dilatation du câble.

Ce fort degré de liberté dans un axe de la cavité permet un étalement à plat des modules (ou fibres) optiques dans l'autre axe de la cavité, et offre comme on l'a précisé ci-dessus deux avantages importants. D'une part, la possibilité d'un câblage en long des modules, aboutissant à un procédé très simple, autorisant de grandes vitesses de production et très économique. D'autre part, la « nappe » de modules (ou fibres) est facilement accessible à la fois par la visibilité des modules et par le jeu important de ces mêmes modules dans la cavité rendant leur extraction extrêmement facile y compris sur de grandes longueurs. La dérivation d'un module (ou d'une fibre) est effectuée sans contraintes préjudiciables pour le module lui-même (ou la fibre), et sans interaction préjudiciable avec les modules voisins (ou fibres), ce qui est essentiel pour des liaisons hauts débits et pour des interventions qui peuvent avoir lieu alors que certaines fibres ou certaines modules sont déjà en service.

Le matériau utilisé pour la fabrication de la gaine est de préférence peu coûteux, et permet d'obtenir de petits rayons de courbures, petits rayons de courbures d'autant plus autorisés que le jeu latéral des modules dans la cavité est important, et une protection efficace du câble notamment aux chocs et à l'écrasement.

Un matériau approprié peut être choisi parmi les élastomères de type caoutchouc naturel, les copolymères styrène butylène styrène et styrène éthylène butylène styrène, des formulations souples de la gamme élastomères, composées de polymères tels que les copolymères d'éthylène et d'acrylate de méthyle, acrylate d'éthyle, acrylate de butyle, et les copolymères d'éthylène et d'acétate de vinyle, ces polymères étant éventuellement associés à des charges ignifugeantes et des adjuvants antioxydants ; les copolymères de type polyestheréther tels que les copolymères Arnitel^{®} fabriqué par la société DSM ou Hytrel^{®} fabriqué par la société Dupont de Nemours. Il s'agira de préférence d'une ou plusieurs polyoléfines ignifugées sans halogène, du type couramment utilisé dans le gainage des câbles posés en immeuble. Dans le cas d'une utilisation pour l'extérieur, on pourra envisager de réaliser un câble avec une cavité recevant les modules, entourée d'une gaine réalisée par exemple en PVC, enrobée d'une enveloppe de type polyéthylène moyenne ou haute densité plus adaptée aux techniques de tirage en conduite et comportant des éléments de renforcement.

Dans un mode de réalisation, la gaine peut présenter un ou des filets colorés, obtenus par exemple par coextrusion. Le rôle de ces filets est de signaler les zones où pourront être percées les fenêtres et, également, d'identifier le câble optique tout en lui donnant une apparence agréable. Les fenêtres peuvent être ouvertes de part et d'autre de la nappe de fibres ou modules. La présence de ces filets colorés en facilitent l'ouverture par l'installateur.

Dans un autre mode de réalisation, la gaine peut présenter une ou des amorces de rupture plus ou moins marquées et éventuellement colorées, par exemple dans le creux de l'amorce, éventuellement en combinaison avec un ou des filets colorés. De telles amorces facilitent encore plus l'ouverture des fenêtres. Cependant, elles tendent à fragiliser la structure du câble. Un tel mode de réalisation est donc plus adapté à des câbles subissant peu de contraintes, par exemple dans le cas de câblage d'immeuble avec pose sur chemin de câbles.

Dans un autre mode de réalisation, la gaine présente une zone d'épaisseur plus fine, entre deux guides, afin de faciliter l'ouverture des fenêtres au niveau de cette zone moins épaisse.

Dans le cas de câbles subissant des contraintes importantes, par exemple ceux posés par tirage, soufflage ou poussage en conduite et en site extérieur, on préférera utiliser un câble comprenant en plus de la gaine habituelle une enveloppe supplémentaire extérieure.

Dans ce cas, l'enveloppe externe peut comprendre un ou des filets colorés, et/ou une ou des amorces de rupture, et/ou une zone d'épaisseur plus fine. Cette enveloppe peut également contenir des éléments de renforcement. Le matériau de cette enveloppe peut être de type polyéthylène moyenne ou haute densité. La gaine et l'enveloppe peuvent être fabriquées par coextrusion ou, plus facilement, par extrusion successive de la gaine, par exemple en PVC, puis de l'enveloppe.

Lors de l'installation d'un câble selon l'invention, on voit donc qu'il est possible d'accéder de façon continue, c'est à dire à n'importe quel endroit du câble et à n'importe quel moment, de façon extrêmement simple, aux modules ou éléments optiques présents dans le câble.

Par exemple, on peut ouvrir sur une très courte longueur une partie du câble selon le grand axe, et enlever une partie de la gaine grâce à un outil particulièrement adapté à la forme et aux dimensions du câble, en réalisant ainsi une première fenêtre d'accès à l'endroit prévu pour la dérivation. En raison de sa forme, le câble sert de guide à l'outil, qui peut comporter par exemple une ou deux lames tranchantes. L'ouverture est sans risque pour les modules ou les fibres en raison de leur jeu dans la cavité. On peut reproduire l'opération en aval, à une distance de la première fenêtre choisie en fonction de la longueur de dérivation recherchée, longueur qui peut aller par exemple de quelques dizaines de centimètres à plusieurs mètres, et ainsi former une deuxième fenêtre d'accès. Il suffit alors d'accéder, au module choisi dans la deuxième fenêtre, de le sectionner, puis de l'extraire par la première fenêtre c'est-à-dire la fenêtre choisie pour la dérivation.

Une telle extraction est rendue possible et facile grâce au jeu des modules ou des fibres dans la cavité, grâce au faible coefficient de frottement de la matière constituant leur gaine ou pellicule, et enfin grâce au fait que les modules ou fibres sont posés en long donc sans câblage. Par ailleurs, les fenêtres peuvent n'être ouvertes que sur de très courtes longueurs, typiquement quelques centimètres.

Après la dérivation, on peut refermer les fenêtres par fixation (par exemple par collage) d'un couvercle qui sert de rustine et permet de rétablir une meilleure protection des modules ou fibres à l'intérieur du câble, câble qui a conservé ses propriétés mécaniques pendant toute l'opération de dérivation. Par ailleurs, on peut placer le module ou la fibre dérivé à l'intérieur d'une gaine annelée de dimensions appropriées ou tout type de gaine pré-aiguillée en fonction de l'utilisation envisagée, sans avoir à utiliser de raccordements intermédiaires.

Bien entendu, dans certains cas d'application, on peut envisager des câbles de plus petites dimensions avec moins de capacité de fibres, en plaçant dans la cavité non plus des modules, mais directement des fibres optiques, éventuellement colorées. Si on utilise des modules, on voit que les possibilités sont multiples selon l'ambition du projet de câblage, chaque module élémentaire pouvant comprendre 2, 4, 6, 8 ou 12 fibres par exemple, offrant des capacités de câbles allant par exemple de 24 à 96 fibres voire plus, en fonction du nombre de modules.

Selon la technique choisie, on préférera travailler avec des modules de faible capacité pour ne desservir qu'un seul bureau par exemple, ou on préférera travailler avec des modules de plus forte capacité afin de desservir une zone dense constituée de quatre, huit ou douze bureau ou d'un bureau contenant plusieurs postes de travail.

On voit donc que le câble objet de l'invention peut répondre à de multiples choix d'ingénierie tout en conservant ses qualités intrinsèques d'accessibilité continue et de gain considérable sur les coûts d'installation.

Bien entendu ce principe de câble à accessibilité continue repose sur le constat que le coût des fibres optiques a sensiblement diminué au gré des étapes décisives de productivité des procédés modernes de production, et que la technique de dérivation continue suppose, sauf dans le cas d'une hypothèse de bouclage des liaisons, que les parties des fibres en aval de la dérivation sont perdues pour l'utilisation considérée. Par contre il est possible d'utiliser ces fibres ultérieurement soit pour boucler une liaison soit pour créer des liaisons intermédiaires. Le fait de perdre des longueurs de fibres s'avère en tout état de cause nettement plus économique, surtout en cas d'utilisation de fibres monomodes, que de poser des séries de petits câbles et de réaliser une structure de type distribuée.

L'augmentation rapide et sensible des débits pour les applications de type multimédia plaide d'ailleurs fortement en faveur d'une utilisation directe de fibres monomodes, y compris dans les parties verticales et horizontales des câblages d'entreprises, à condition d'adjoindre à une telle utilisation des modules optoélectroniques très bas de gamme et très bas coût. Le câble objet de l'invention ouvre donc une nouvelle voie de câblage d'immeuble ou de câblage de petits réseaux de ville, de boucles... très économique et très souple d'utilisation permettant d'envisager des solutions optiques compétitives par rapport aux solutions successives utilisant des supports cuivre tout en offrant à l'utilisateur un support capable d'admettre des débits considérables.

D'autres caractéristiques et avantages de l'invention apparaîtront encore à la lecture de la description qui suit d'un mode de réalisation particulier non limitatif, en relation avec les figures dans lesquelles :
- la figure 1 est une vue en coupe d'un câble selon l'invention, comprenant 12 modules de câbles de 8 fibres (les fibres ne sont représentées que dans un seul des modules),
- la figure 2 est une vue en coupe d'un câble selon l'invention (modules non représentés), dont la gaine extérieure comprend des amorces,
- la figure 3 est une vue en coupe d'un câble selon l'invention comprenant une double gaine (un seul module représenté),
- la figure 4 est une vue en coupe du câble de la figure 1 (un seul module représentés après avoir pratiqué l'ouverture d'une fenêtre d'accès,
- la figure 5 est une vue en coupe d'un câble selon l'invention (modules non représentés), dont la gaine présente une zone d'épaisseur plus fine,
- la figure 6 est une vue en perspective d'un câble selon l'invention présentant deux fenêtres d'accès aux modules,
- la figure 7 est une vue en perspective du câble de la figure 6 après fermeture de la fenêtre aval et mise en place d'un manchon assurant la protection du module dérivé.

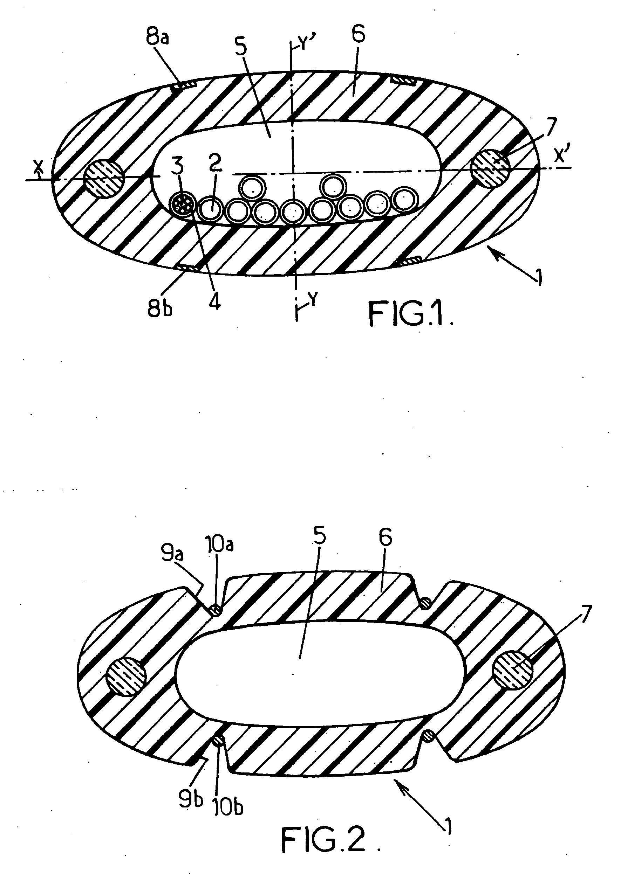

La figure 1 représente une vue en coupe d'un câble (1) selon l'invention. Ce câble comprend 12 modules (2) de 8 fibres optiques monomodes ou multimodes (3), de diamètre 250 µm, et enveloppées d'une fine pellicule (4) facilement dégainable. La dimension des modules peut aller de 0,8 à 1,3 mm pour 12 fibres. Les modules (2) sont sensiblement étalés en nappe sur le grand axe xx' de la cavité interne (5) d'une gaine (6), certains modules se chevauchant. La gaine (6) est de forme extérieure générale ovalisée. Elle comprend des éléments de renforcement (7) de type non métalliques verre-époxy situés de part et d'autre du petit axe. La cavité (5) est de forme générale ovalisée avec un grand axe coïncidant avec le grand axe xx' de la forme extérieure ovale. Les modules sont disposés de façon à conserver un certain jeu dans le petit axe yy' de la cavité. La gaine comprend des filets colorés (8a, 8b) de part et d'autre du petit axe.

La figure 2 représente une coupe d'un câble (1) selon l'invention. Dans ce mode de réalisation, la gaine (6) formant une cavité interne (5) comprend des éléments de renforcement (7), et des amorces de rupture (9a, 9b) colorées en creux (10a, 10b).

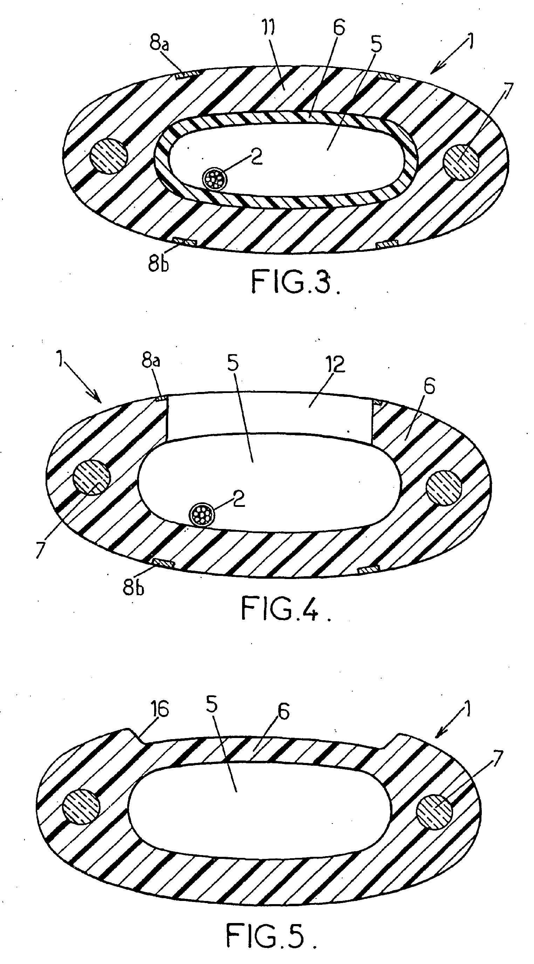

La figure 3 est une vue en coupe d'un câble (1) selon l'invention comprenant une cavité interne (5) dans laquelle seul un module (2) est représenté, une gaine (6) en PVC, et une enveloppe (11) de protection de type polyéthylène moyenne ou haute densité comprenant des éléments de renforcement (7) et des filets colorés (8a, 8b) .

La figure 4 est une vue en coupe du câble (1) de la figure 1 après qu'une fenêtre d'accès (12) aux modules (2) ait été ouverte au droit des filets colorés (8a).

La figure 5 représente une vue en coupe d'un câble (1) dont la gaine (6) présente une zone d'épaisseur plus fine, entre deux guides (16). La gaine forme une cavité interne (5) et comprend des éléments de renforcement (7).

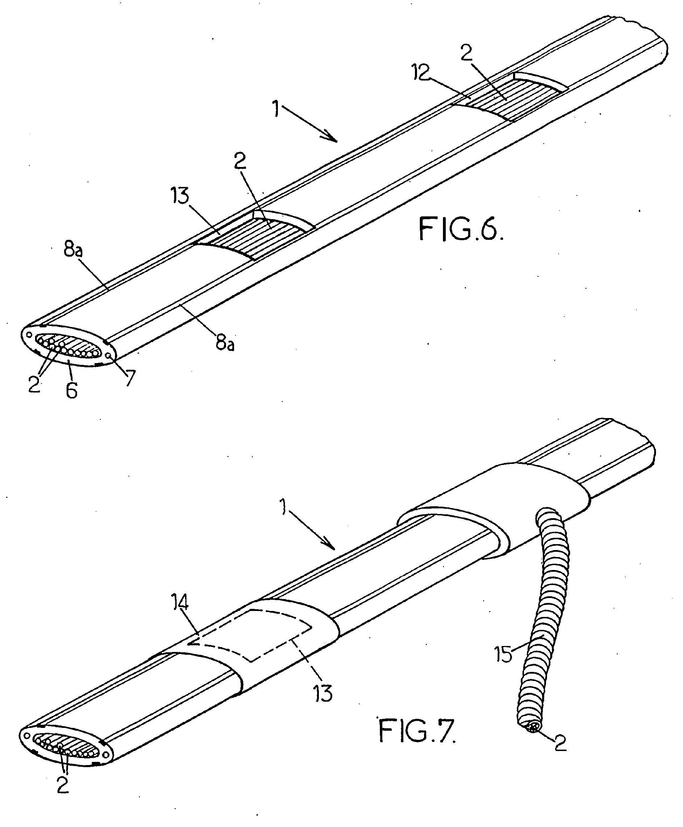

La figure 6 représente une vue en perspective d'un câble (1) selon l'invention, comprenant une cavité contenant des modules (2) entourée d'une gaine comprenant des éléments de renforcement (7) et des filets colorés (8a, 8b), dans lequel deux fenêtres d'accès (12, 13) ont été ouvertes. Un module (2) peut être coupé dans la fenêtre en aval (13) avant d'être extrait dans la fenêtre en amont (12).

La figure 7 est une vue en perspective du câble de la figure 5, dans lequel la fenêtre en aval (13) a été refermée par collage d'un couvercle (14), et le module dérivé (2) a été placé dans une gaine annelée (15)

On voit donc ainsi que le câble optique à accessibilité continue objet de l'invention par sa forme générale de préférence ovale, par ses deux axes privilégiés dont un pour une courbure facile et une accessibilité des modules étalés en long dans la grande dimension de son alvéole centrale et l'autre pour un jeu important des modules qui facilite aussi l'extraction et procure au câble de bonnes qualités thermiques et mécaniques, offre des avantages importants qui conduisent à des approches de câblage de type centralisé très économiques soit pour le câble d'immeubles, soit pour des petits réseaux extérieurs ou boucles optiques.

## Revendications

1. Câble optique (1), comprenant une gaine de protection fermée (6) entourant une cavité (5) présentant en coupe transversale deux axes sensiblement perpendiculaires se croisant au centre de la cavité, et au moins deux modules optiques (2) qui présentent un faible coefficient de frottement qui permet de les extraire d'une rangée de modules sans aucune difficulté, comprenant chacun au moins une fibre optique (3) entourée d'une fine pellicule (4), et organisés de façon telle qu'ils occupent la majeure partie de la cavité dans un axe mais qu'ils laissent un jeu dans l'autre axe de la cavité, permettant ainsi un accès aux modules optiques (2) en n'importe quel endroit du câble.

2. Câble selon la revendication 1, **caractérisé en ce que** les modules optiques sont positionnés en long dans le câble.

3. Câble selon l'une quelconque des revendications 1 à 2, **caractérisé en ce qu'**un axe est plus grand que l'autre.

4. Câble selon la revendication 3, **caractérisé en ce que** les fibres ou modules optiques occupent la majeure partie du grand axe.

5. Câble selon l'une quelconque des revendications 1 à 4, **caractérisé en ce que** la cavité présente une forme circulaire ou ovale ou ovalisée, de préférence ovalisée.

6. Câble selon l'une quelconque des revendications 1 à 5, **caractérisé en ce que** la gaine présente une forme extérieure circulaire ou ovale ou ovalisée, de préférence ovalisée.

7. Câble selon la revendication 6, **caractérisé en ce que** le grand axe de la gaine coïncide avec le grand axe de la cavité.

8. Câble selon l'une quelconque des revendications 1 à 7, **caractérisé en ce qu'**il comprend une enveloppe (11) autour de la gaine.

9. Câble selon l'une quelconque des revendications 1 à 8, **caractérisé en ce que** la gaine ou l'enveloppe présente un ou des filets colorés (8a, 8b).

10. Câble selon l'une quelconque des revendications 1 à 9, **caractérisé en ce que** la gaine ou l'enveloppe présente une ou des amorces (9a, 9b) éventuellement colorées (10a, 10b).

11. Câble selon l'une quelconque des revendications 1 à 10, **caractérisé en ce que** la gaine ou l'enveloppe présente une zone d'épaisseur plus fine.

## Claims

1. An optical cable (1) comprising a closed protective sheath (6) surrounding a cavity (5) having in cross section two substantially perpendicular axes intersecting at the centre of the cavity, and at least two optical modules (2) having a low coefficient of friction which makes it possible to extract them from a row of modules without any difficulty, each module comprising at least one optical fibre (3) surrounded by a thin film (4), the modules being arranged such that they occupy the greater part of the cavity along one axis but that they allow a clearance along the other axis of the cavity, thereby allowing accessibility to the optical modules (2) at any point of the cable.

2. The cable as claimed in claim 1, **characterized in that** the optical modules are positioned lengthwise in the cable.

3. The cable as claimed in any one of claims 1 to 2, **characterized in that** one axis is longer that the other.

4. The cable as claimed in claim 3, **characterized in that** the fibres or modules occupy the greater part of the long axis.

5. The cable as claimed in any one of claims 1 to 4, **characterized in that** the cavity has a shape which is circular or oval or ovalized, preferably ovalized..

6. The cable as claimed in any one of claims 1 to 5, **characterized in that** the sheath has an external shape which is circular or oval or ovalized, preferably ovalized.

7. The cable as claimed in claim 6, **characterized in that** the long axis of the sheath coincides with the long axis of the cavity.

8. The cable as claimed in any one of claims 1 to 7, **characterized in that** it comprises a jacket (11) around the sheath.

9. The cable as claimed in any one of claims 1 to 8, **characterized in that** the sheath or the jacket has one or more colored threads (8a, 8b).

10. The cable as claimed in any one of claims 1 to 9, **characterized in that** the sheath or the jacket has one or more initiators (9a, 9b) which are possibly colored (10a, 10b).

11. The cable as claimed in any one of claims 1 to 10, **characterized in that** the sheath or the jacket has a region of lower thickness.

## Patentansprüche

1. Optisches Kabel, das einen geschlossenen Schutzmantel (6) umfasst, der einen Hohlraum (5) umgibt, welcher im Querschnitt zwei Achsen aufweist, die im Wesentlichen im rechten Winkel zueinander stehen und sich im Mittelpunkt des Hohlraums kreuzen, sowie mindestens zwei optische Module (2) umfasst, die einen geringen Reibungskoeffizienten haben, der es erlaubt, sie problemlos aus einer ganzen Reihe von Modulen herauszuziehen, wobei jedes Modul mindestens eine mit einem dünnen Überzug (4) versehene Lichtleitfaser (3) enthält, und die Module dergestalt angeordnet sind, dass sie in Richtung der einen Achse den größten Teil des Hohlraums einnehmen, jedoch in Richtung der anderen Achse des Hohlraums ein Spiel lassen, so dass auf diese Weise an jeder beliebigen Stelle des Kabels ein Zugang zu den optischen Modulen (2) möglich ist.

2. Optisches Kabel nach Anspruch 1, **dadurch gekennzeichnet, dass** die optischen Module in dem Kabel längs angeordnet sind.

3. Optisches Kabel nach einem der Ansprüche 1 bis 2, **dadurch gekennzeichnet, dass** die eine Achse länger ist als die andere.

4. Optisches Kabel nach Anspruch 3, **dadurch gekennzeichnet, dass** die Lichtleitfasern oder optischen Module den größten Teil der Hauptachse einnehmen.

5. Optisches Kabel nach einem der Ansprüche 1 bis 4, **dadurch gekennzeichnet, dass** der Hohlraum eine kreisförmige oder ovale oder langrunde, vorzugsweise eine langrunde Form aufweist.

6. Optisches Kabel nach einem der Ansprüche 1 bis 5, **dadurch gekennzeichnet, dass** der Mantel eine kreisförmige oder ovale oder langrunde, vorzugsweise eine langrunde Außenform aufweist.

7. Optisches Kabel nach Anspruch 6, **dadurch gekennzeichnet, dass** die Hauptachse des Mantels mit der Hauptachse des Hohlraums zusammenfällt.

8. Optisches Kabel nach einem der Ansprüche 1 bis 7, **dadurch gekennzeichnet, dass** es um den Mantel herum eine Umhüllung (11) aufweist.

9. Optisches Kabel nach einem der Ansprüche 1 bis 8, **dadurch gekennzeichnet, dass** der Mantel oder die Umhüllung eine oder mehrere farbige Streifen (8a, 8b) aufweist.

10. Optisches Kabel nach einem der Ansprüche 1 bis 9, **dadurch gekennzeichnet, dass** der Mantel oder die Umhüllung einen oder mehrere Ansätze (9a, 9b), eventuell farbige Ansätze (10a, lOb) aufweist.

11. Optisches Kabel nach einem der Ansprüche 1 bis 10, **dadurch gekennzeichnet, dass** der Mantel oder die Umhüllung einen Bereich von geringerer Dicke aufweist.
